# EUROPÄISCHE PATENTANMELDUNG

(11) **EP 1 733 865 A1**
(43) Veröffentlichungstag der Anmeldung: **20.12.2006**
(21) Anmeldenummer: 06009609.6
(22) Anmeldetag: 10.05.2006
(51) Int. Cl.: B29C 45/28

(54) **Reinigungsvorrichtung zur Verwendung in Spritzgiessvorrichtungen und Spritzgiessvorrichtung**

(30) Priorität: 16.06.2005 DE 102005028100
(71) Anmelder: Günther Heisskanaltechnik GmbH, 35066 Frankenberg/Eder (DE)
(72) Erfinder: Günther, Herbert, 35108 Allendorf/Eder (DE)
(74) Vertreter: Buchhold, Jürgen

(57) **Zusammenfassung**

Um die Verschlußnadeln 20 einer Spritzgießvorrichtung (1) während des Betriebes sauber halten zu können, ist innerhalb der Spritzgießvorrichtung 1 eine Reinigungsvorrichtung (10) vorgesehen. Die Spritzgießvorrichtung (1) hat wenigstens eine Nadelverschlußdüse, durch die ein fließfähiges Material einem trennbaren Formeinsatz zuführbar ist, wobei die Verschlußnadel (20) mittels eines Antriebs in eine Öffnungs- und in eine Schließstellung bringbar ist. Jeder Verschlußnadel (20) ist wenigstens ein an den Außenumfang (24) der Verschlußnadel (20) formangepaßtes Reinigungselement (40) zugeordnet, mit dem am Außenumfang (24) der Verschlußnadel (20) anhaftendes Material entfernbar ist. Die bevorzugt als flache Scheiben ausgebildeten Reinigungselemente (40) sind in einem Gehäuse (11) zu einem Abstreiferpaket zusammengefaßt, wobei zwischen zwei benachbarten Reinigungselementen (40) Distanzstücke (14) angeordnet sind. Das Gehäuse (11) ist an oder in der Spritzgießvorrichtung (1) festlegbar.

## Beschreibung

Die Erfindung betrifft eine Reinigungsvorrichtung zur Verwendung in Spritzgießvorrichtungen mit Nadelverschlußdüsen, sowie eine Spritzgießvorrichtung.

Nadelverschlußdüsen werden in Spritzgießvorrichtungen eingesetzt, um eine fließfähige Masse bei einer vorgebbaren Temperatur unter hohem Druck einem trennbaren Formeinsatz zuzuführen. Sie haben meist pneumatisch oder hydraulisch angetriebene Verschlußnadeln, die Angußöffnungen im Formeinsatz periodisch öffnen und verschließen. Dies ermöglicht genaueste Material-Dosierungen, insbesondere bei rascher Schußfolge. Man kann die fließfähige Masse aber auch segmentiert einspritzen, z.B. beim Kaskadenanguß.

Jede Verschlußnadel ist im werkzeugseitigen Bereich der Spritzgießvorrichtung axialverschieblich gelagert und im düsenseitigen Bereich bevorzugt mittig durch einen Strömungskanal für die zu verarbeitende Masse hindurchgeführt (siehe beispielsweise DE 32 49 486 C3 oder DE 34 03 603 A1). Der Strömungskanal endet in einem Düsenmundstück, das endseitig eine Düsenaustrittsöffnung bildet. In Schließstellung greift das untere Ende der Verschlußnadel in einen Dichtsitz ein, der im Düsenmundstück oder im Formeinsatz ausgebildet ist.

Zur dichten Führung der Verschlußnadel ist in der Verteilerplatte der Spritzgießvorrichtung gewöhnlich eine Führungsbuchse oder eine Dichtungshülse eingesetzt, die den zylindrischen Schaft der Verschlußnadel aufnimmt (siehe hierzu beispielsweise DE 39 26 357 A1 oder EP 1 223 020 B1). Zwischen der Verschlußnadel und der Buchse verbleibt ein zylinderförmiger Freiraum, in den während des Betriebes der Spritzgießvorrichtung fließfähiges Material eindringt, so daß die Nadel gegenüber dem Strömungskanal abgedichtet wird. Zugleich entsteht ein Schmiereffekt, der die Reibung zwischen der Verschlußnadel und der Buchse herabsetzt.

Trotz optimaler Ausbildung eines solchen Dichtsystems läßt es sich aufgrund der relativ hohen Drücke innerhalb des Werkzeugs und aufgrund der Hubbewegungen der Nadel nicht vermeiden, daß die zu verarbeitende Masse durch die Führungs- oder Dichtbuchse hindurch nach außen dringt. Dort bleiben die Materialreste an der Verschlußnadel haften, was nicht nur die Dichtwirkung beeinträchtigt, sondern auf Dauer die Öffnungs- und Schließbewegung der Verschlußnadel behindern kann. Aufwendige Reinigungs- oder Wartungsarbeiten sind die Folge.

Ziel der Erfindung ist es, diese und weitere Nachteile des Standes der Technik zu vermeiden und die Verschlußnadeln einer Spritzgießvorrichtung während des Betriebes sauber halten zu können. Ein weiteres wichtiges Ziel der Erfindung besteht darin, eine Spritzgießvorrichtung mit Nadelverschlußdüsen zu schaffen, deren Verschlußnadeln insbesondere im Bereich der Führungsbuchsen und/oder Dichtungshülsen kontinuierlich von Materialresten befreit werden. Die Reinigung soll mit einfachen Mitteln kostengünstig realisierbar sein. Angestrebt wird ferner eine einfache Handhabung mit langen Wartungsintervallen.

Hauptmerkmale der Erfindung sind in den Ansprüchen 1, 18 und 24 angegeben. Ausgestaltungen sind Gegenstand der Ansprüche 2 bis 17 und 19 bis 23.

Bei einer Reinigungsvorrichtung zur Verwendung in einer Spritzgießvorrichtung mit wenigstens einer Nadelverschlußdüse, durch die ein fließfähiges Material einem trennbaren Formeinsatz zuführbar ist und deren Verschlußnadel mittels eines Antriebs in eine Öffnungs- und in eine Schließstellung bringbar ist, sieht die Erfindung vor, daß jeder Verschlußnadel wenigstens ein Reinigungselement zugeordnet ist, mit dem am Außenumfang der Verschlußnadel anhaftendes Material entfernbar ist. Dadurch werden die Verschlußnadeln der Spritzgießvorrichtung während des Betriebes permanent sauber gehalten, ohne daß aufwendige Wartungs- oder Reinigungsarbeiten notwendig sind. Aus der Spritzgießvorrichtung austretende Materialreste werden von dem bzw. den Reinigungselementen erfaßt und entfernt, d.h. die Materialreste können nicht mehr an der Veschlußnadel hängen bleiben und den Betrieb der Spritzgießvorrichtung stören und/oder unterbrechen.

Dazu trägt insbesondere bei, wenn das Reinigungselement an den Außenumfang der Verschlußnadel formangepaßt ist. An dieser haftende Materialreste werden mithin stets zuverlässig aufgenommen und entfernt, so daß die Verschlußnadel auch über längere Zeitraume und über den gesamten Umfang sauber bleibt. In einer weiteren vorteilhaften Ausbildung steht das Reinigungselement mit dem Außenumfang der Verschlußnadel zumindest abschnittsweise reibschlüssig in Kontakt, wodurch sich der Reinigungseffekt weiter verbessert.

Zweckmäßig weist das Reinigungselement eine Kante oder einen Randbereich aufweist, die bzw. der benachbart zum Außenumfang der Verschlußnadel angeordnet ist. Die Reinigungselemente nehmen damit das am Außenumfang der Verschlußnadel anhaftende Material stets zuverlässig auf, so daß aus dem Werkzeug austretende Materialreste stets zuverlässig von der Verschlußnadel entfernt werden.

Konstruktiv ist es günstig, wenn das Reinigungselement ein Flachkörper ist, der kreisförmig, scheibenförmig, ringförmig oder streifenförmig ausgebildet sein kann. Diese Aufzählung ist nicht abschließend. Das Reinigungselement kann beispielsweise auch dreieckig oder trapezförmig gestaltet sein.

In einer weiteren erfindungsgemäßen Ausführungsform ist das Reinigungselement in einem Winkel zur Längsachse der Verschlußnadel ausgerichtet oder angestellt. Dadurch läßt sich der Reinigungseffekt weiter verbessern, da selbst fest anhaftende Materialreste zuverlässig von der Nadeloberfläche entfernt werden. Der Winkel kann dabei zwischen 45° und 135° liegen. Bevorzugt werden die Reinigungselemente jedoch rechtwinklig zur Verschlußnadel angeordnet, so daß der Winkel zwischen der Nadel und dem Reinigungselement 90° beträgt und die Nadel bei jeder Hubbewegung gereinigt wird. Um die Winkelanstellung zu realisieren ist es günstig, das Reinigungselement hut-, trichter- oder kegelförmig auszubilden, wobei die Verschlußnadel das Reinigungselement zentrisch durchsetzt.

Gemäß einer weiteren wichtigen Ausführungsform weist das Reinigungselement wenigstens eine Öffnung zur Aufnahme wenigstens einer Verschlußnadel auf. Diese läßt sich dadurch in nur einem Arbeitsgang über den gesamten Umfang von anhaftendem Material befreien, was sich günstig auf den Wirkungsgrad der Reinigungsvorrichtung auswirkt.

Damit die Verschlußnadeln innerhalb der Reinigungsvorrichtung nicht hängenbleiben oder verkanten, sind die Reinigungselemente mit Schlitzen oder Nuten versehen, die sich von der Öffnung radial nach außen erstrecken. Hierdurch entstehen elastische Kreissegmente oder Streifenelemente, die sich der Hubbewegung der Verschlußnadel anpassen und bei Bedarf unabhängig voneinander ausweichen können.

Dazu trägt auch bei, wenn die Reinigungselemente quer zur Längsachse der Verschlußnadel radial beweglich angeordnet sind. Auf diese Weise werden Auslenkungen der Nadel kompensiert, beispielsweise bedingt durch Wärmeausdehnung.

Eine Weiterbildung der Erfindung sieht vor, daß das Reinigungselement symmetrisch zur Längsachse der Verschlußnadel ausgebildet ist. Auch dies trägt dazu bei, daß die Verschlußnadel bei jedem Nadelhub stets rundum gereinigt wird.

Die Erfindung sieht weiter vor, daß in Längsrichtung der Verschlußnadel wenigstens zwei Reinigungselemente hintereinander angeordnet sind. Diese ergänzen sich mithin in ihrer Reinigungswirkung, was sich günstig auf den Wirkungsgrad der Reinigungsvorrichtung auswirkt. Von Vorteil ist ferner, wenn zwischen zwei benachbarten Reinigungselementen Distanzstücke angeordnet sind. Die dabei entstehenden Hohlräume zwischen den Reinigungselementen können eine relativ große Menge des von der Verschlußnadel entfernten Materials aufnehmen, so daß die Reinigungsvorrichtung eine sehr hohe Standzeit aufweist. Erst wenn die Hohlräume mit Materialresten gefüllt sind, muß die Reinigungsvorrichtung ausgewechselt oder gereinigt werden.

Hierzu ist es zweckmäßig, wenn die Reinigungselemente in einem Gehäuse, einer Halterung o.dgl. angeordnet sind, die beispielsweise an oder in der Spritzgießvorrichtung festlegbar ist, beispielsweise in oder an einer Aufspannplatte der Spritzgießvorrichtung.

Alle genannten Vorteile ergeben sich auch bei Kombination einer Spritzgießvorrichtung mit einer Reinigungsvorrichtung gemäß den Merkmalen der Ansprüche 1 bis 17, für die selbständiger Schutz beansprucht wird.

Eine vorteilhafte Weiterbildung sieht vor, daß die Reinigungsvorrichtung an oder in einer Aufspannplatte der Spritzgießvorrichtung angeordnet ist. Die Verschlußnadel wird dadurch weder in ihrer Halterung bzw. Lagerung noch in ihrer durch einen Antrieb erzeugten Hin- und Herbewegung beeinträchtigt. Die Reinigungsvorrichtung sorgt jedoch dafür, daß auf dem Außenumfang der Verschlußnadel anhaftende Materialreste der zu verarbeitenden Spritzgießmasse permanent entfernt werden. Ergänzend oder Alternativ kann die Reinigungsvorrichtung auch an oder in einer Verteilerplatte der Spritzgießvorrichtung angeordnet sein. Oder man ordnet die Reinigungsvorrichtung zwischen der Aufspannplatte und der Verteilerplatte an.

Dabei kann es von Vorteil sein, wenn die Reinigungsvorrichtung benachbart zu einer Führungs- oder Dichtbuchse für die Verschlußnadel angeordnet ist. Ferner besteht die Möglichkeit, die Reinigungsvorrichtung unmittelbar in der Führungs- oder Dichtbuchse zu integrieren, was den Aufbau und die Handhabung der Spritzgießvorrichtung weiter vereinfacht.

Die darüber hinaus definierte Verwendung einer Reinigungsvorrichtung in einer Spritzgießvorrichtung, für die ebenfalls selbständiger Schutz beansprucht wird, verhindert, daß die Verschlußnadeln der in einer Spritzgießvorrichtung eingesetzten Nadelverschlußdüsen, durch das aus dem Spritzgießwerkzeug austretende Material verunreinigt werden. Jede Verschlußnadel fährt bei ihrer Hubbewegung durch die Reinigungsvorrichtung hindurch, wobei die übereinander geschichteten Reinigungselemente die Nadel von Materialrückständen befreien. Letztere können nicht an der Nadel kleben.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Teildarstellung einer Spritzgießvorrichtung mit einer Reinigungsvorrichtung für eine Verschlußnadel, teilweise im Schnitt,
- Fig. 2: eine vergrößerte Darstellung der Reinigungsvorrichtung von Fig. 1 und der Verschlußnadel, teilweise im Schnitt,
- Fig. 3: eine Draufsicht auf die Reinigungsvorrichtung von Fig. 1,
- Fig. 4: eine seitliche Schnittansicht der Reinigungsvorrichtung von Fig. 1 und
- Fig. 5: eine Druntersicht der Reinigungsvorrichtung von Fig. 1.

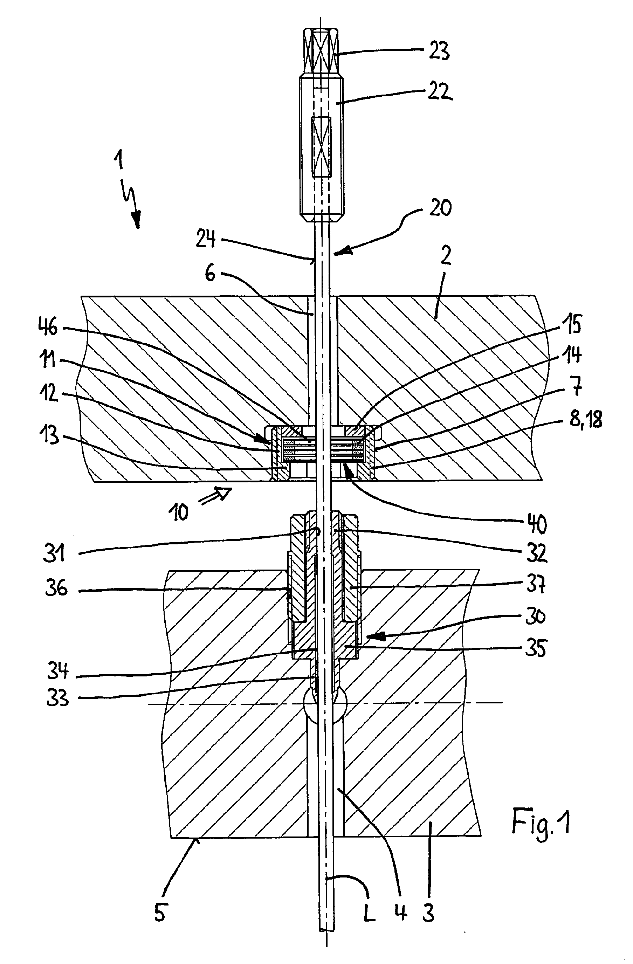

Die in Fig. 1 allgemein mit 1 bezeichnete Spritzgießvorrichtung dient der Herstellung von Formteilen aus einer fließfähigen Masse, beispielsweise einer Kunststoffschmelze. Sie hat eine Aufspannplatte 2 sowie parallel dazu eine Verteilerplatte 3, in der ein System von Strömungskanälen 4 ausgebildet ist. Diese münden jeweils in einer (nicht gezeigten) Nadelverschlußdüse, die an der Unterseite 5 der Verteilerplatte 3 positioniert oder montiert ist.

Jede Nadelverschlußdüse hat einen (ebenfalls nicht dargestellten) bevorzugt außenbeheizten Düsenkörper, in dem konzentrisch zur Längsachse L und in Fortsetzung des Strömungskanals 4 ein Materialrohr ausgebildet ist. Letzteres endet in einem Düsenmundstück, das endseitig eine Düsenaustrittsöffnung bildet, über die das zu verarbeitende Material durch eine Angußöffnung hindurch einem trennbaren (gleichfalls nicht gezeigten) Formeinsatz zugeführt wird.

Zum Öffnen und Schließen der in dem Formeinsatz ausgebildeten Angußöffnung ist eine Verschlußnadel 20 vorgesehen, die das Materialrohr der Nadelverschlußdüse längsverschieblich durchsetzt und von einem (nicht gezeichneten) mechanischen, pneumatischen oder hydraulischen Antrieb in eine Schließ- und Öffnungsstellung bringbar ist. In Schließstellung greift die Verschlußnadel 20 mit einem endseitig ausgebildeten (nicht dargestellten) Verschlußteil durch die Düsenaustrittsöffnung hindurch dichtend in die Angußöffnung ein.

Im werkzeugseitigen Bereich ist die Verschlußnadel 20 durch die Verteilerplatte 3 und die Aufspannplatte 2 hindurch mit dem Antrieb verbunden, wobei die Nadel 20 endseitig einen Adapter 22 trägt, der ― um die Nadel 20 drehfest montieren zu können - mit einem im Querschnitt eckigen Endabschnitt 23 versehen ist.

Zur Durchführung der Verschlußnadel 20 ist in der Aufspannplatte 2 eine Durchgangsbohrung 6 eingebracht, deren Innendurchmesser größer ist als der Außendurchmesser der Verschlußnadel 20. In der Verteilerplatte 3 sitzt eine Führungsbuchse 30 mit einer zentrischen Durchgangsbohrung 31, deren Innendurchmesser in den Endbereichen 32, 33 der Buche 30 bis auf ein geringes Bewegungsspiel dem Außendurchmesser der Verschlußnadel 20 entspricht. Letztere findet damit innerhalb der Buchse 30 eine zentrische Führung.

Zwischen den Endbereichen 32, 33 der Buchse 30 ist axial ein zylinderförmiger Freiraum 34 ausgebildet, dessen Innendurchmesser geringfügig größer ist als der Außendurchmesser der Verschlußnadel 20. Er nimmt während des Betriebes der Spritzgießvorrichtung eine geringe Menge fließfähigen Materials aus dem Strömungskanal 4 auf, was zur Abdichtung der Verschlußnadel 20 gegenüber dem Strömungskanal 4 und der Werkzeugumgebung führt. Gleichzeitig wirkt die fließfähige Masse in dem Freiraum 34 als Gleitmittel, so daß die Reibung zwischen der Verschlußnadel 20 und der Führungsbuchse 30 herabgesetzt wird.

Man erkennt in Fig. 1, daß die Führungsbuchse 30 mit einem verbreiterten Flansch 35 zentrisch in eine Aussparung 36 in der Verteilerplatte 3 eingesetzt und dort mittels einer Schraubbuchse 37 fixiert ist. Die Führungsbuchse 30 liegt, ebenso wie die Durchgangsbohrung 6, koaxial zur Verschlußnadel 20 bzw. zur Längsachse L. Sie besteht beispielsweise aus einem rostfreien oder pulvermetallurgischen Stahl und ist dadurch korrosionsbeständig und verschleißfest. Man kann die Buchse 30 aber auch bei Bedarf aus aus Hartmetall fertigen.

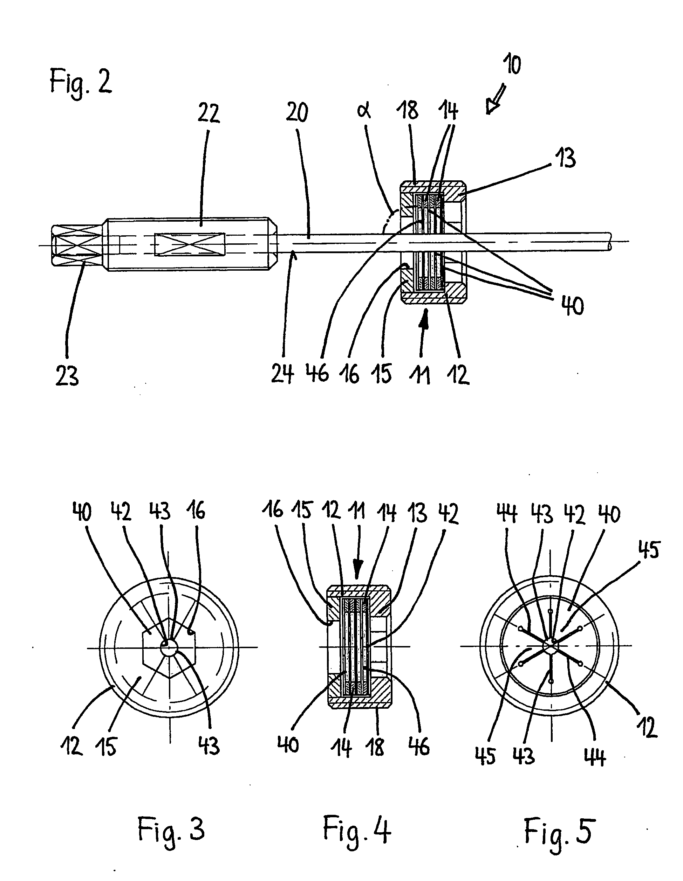

In der Aufspannplatte 2 ist ferner eine Reinigungsvorrichtung 10 für die Verschlußnadel 20 ausgebildet. Diese hat ein Gehäuse 11 mit einer zylindrischen Wandung 12 und einem endseitig ausgebildeten, radial nach innen einspringenden Flanschrand 13. Dieser trägt axial mehrere scheibenförmige Reinigungselemente 40, die randseitig von ringförmigen Distanzstücken 14 in gleichmäßigen Abständen gehalten werden (siehe dazu auch Fig. 2).

Zur Sicherung der als Flachkörper ausgebildeten Reinigungselemente 40 und der dazwischen liegenden Distanzstücke 14 innerhalb der Reinigungsvorrichtung 10 dient ein Sicherungsring 15, der vorzugsweise axial in das Gehäuse 11 eingeschraubt wird. Letzteres ist hierzu endseitig mit einem (nicht näher bezeichneten) Innengewinde versehen, während der Sicherungsring 15 an seinem Außenumfang ein entsprechendes (ebenfalls nicht dargestelltes) Außengewinde aufweist. Eine mittig in den Sicherungsring 15 eingebrachte Sechskant-Aussparung 16 dient dem Ansatz eines Werkzeugs, so daß man das Gehäuse 11 rasch und bequem öffnen und die Reinigungselemente 40 bei Bedarf auswechseln kann. Alternativ wird der Sicherungsring 15 (ohne Gewinde) in das Gehäuse 11 eingepreßt oder mit der Wandung 12 verrastet. Wichtig hierbei ist, daß die Reinigungselemente 40 jederzeit austauschbar sind, d.h. durch neue, gereinigte oder ― je nach Größe der Verschlußnadel ― durch andere Elemente 40 ersetzt werden können.

Wie die Fig. 3 bis 5 näher zeigen, ist jede Scheibe 40 mittig mit einer Öffnung 42 zur Durchführung der Verschlußnadel 20 versehen. Der Innendurchmesser der Öffnung 42 ist dabei so gewählt, daß die von der Öffnung 42 gebildete Kante 43 mit dem Außenumfang 24 der Verschlußnadel 20 form- und reibschlüssig in Kontakt steht. Auf dem Außenumfang 24 der Verschlußnadel 20 anhaftende Materialreste, die beispielsweise aus der Führungsbuchse 30 ausdringen, werden dadurch von den formangepaßten Kanten 43 der Reinigungselemente 40 stets zuverlässig erfaßt und von der Nadel 20 entfernt, d.h. die durch die Reinigungsvorrichtung 10 bzw. durch die Reinigungselemente 40 hindurchgeführte Verschlußnadel 20 wird während des Betriebes der Spritzgießvorrichtung 1 bei jeder Hin- und Herbewegung sauber gehalten.

Damit die Verschlußnadel 20 innerhalb der Reinigungsvorrichtung 10 nicht verkantet oder hängen bleibt, beispielsweise durch antriebsbedingte Auslenkungen aus der von der Längsachse L definierten Mittellage oder aus wärmebedingten Umständen, sind in den Reinigungsscheiben 40 Schlitze 44 eingebracht, die sich von der Öffnung 42 aus radial nach außen erstrecken. Je länger die Schlitze 44 sind, desto größer ist die Elastizität der zwischen den Radialschlitzen 44 ausgebildeten, fächerartig angeordneten Kreissegmente 45. Anstelle von Schlitzen 44 kann man auch radiale Nuten in die Scheiben 40 einbringen, so daß sich die Materialstärke der Scheiben 40 an diesen Stellen vermindert und die benachbarten Segmente 45 relativ zueinander beweglich sind.

Jedes Reinigungselement 40 kann ferner innerhalb des Gehäuses 11 zwischen den Distanzstücken 14 radial beweglich angeordnet sein, so daß Auslenkungen der Nadel 20 stabilisiert werden. Insgesamt ist damit gewährleistet, daß sich die Scheiben 40 entsprechend den Hubbewegungen der Nadel 20 anpassen und den auf dem Außenumfang 24 der Nadel 20 anhaftenden Schmutz stets zuverlässig abstreifen.

In dem Gehäuse 11 sind beispielsweise fünf Reinigungsscheiben 40 eingesetzt, die allesamt in einem Winkel α von 90° zur Längsachse L der Verschlußnadel 20 liegen.

Je nach Art der zu entfernenden Materialreste kann es zweckmäßig sein, einzelne oder alle Reinigungselemente 40 gegenüber der Verschlußnadel 20 in einem Winkel schräg anzustellen. Die Kanten 43 der Reinigungselemente 40 setzen dadurch schräg an der Oberfläche 24 der Verschlußnadel 20 an und können zumindest in einer Richtung auch hartnäckige Schmutzablagerungen stets zuverlässig entfernen. Zweckmäßig sind die Reinigungselemente 40 zu diesem Zweck abschnittsweise kegel-, hut- oder trichterförmig ausgebildet, wobei die Verschlußnadel 20 jedes Reinigungselement 40 zentrisch durchsetzt. Die kegel-, hut- oder trichterförmigen Elemente 40 lassen sich dadurch weiterhin randseitig zwischen Distanzstücken 14 in dem Gehäuse 11 anordnen. Der Winkel α zwischen den Elementen 40 und der Nadel 20 kann zwischen 45° und 135° liegen, beispielsweise bei 60°.

Die Montage der insgesamt symmetrisch zur Längsachse L der Verschlußnadel 20 ausgebildeten Reinigungsvorrichtung 10 erfolgt im vorliegenden Ausführungsbeispiel innerhalb der Durchgangsbohrung 6, die im Randbereich der Aufspannplatte 2 mit einer vergrößerten Ausnehmung 7 versehen ist. Deren mit einem Gewinde 8 versehener Innendurchmesser ist so bemessen, daß man das mit einem korrespondierenden Außengewinde 18 versehen Gehäuse 11 in die koaxial zur Durchgangsbohrung 6 liegende Ausnehmung 7 einschrauben kann. Hierzu sind in dem Flanschrand 13 des Gehäuses 11 rückseitig (nicht dargestellte) Eingriffselemente ausgebildet, um mit einem geeigneten Werkzeug ein Drehmoment auf das Gehäuse 11 ausüben zu können. In montiertem Zustand liegt der Sicherungsring 15 bevorzugt innen am (nicht näher bezeichneten) Boden der Ausnehmung 7 an. Sämtliche Reinigungselemente 40 sind daher stets zuverlässig im Gehäuse 11 gesichert.

Die bevorzugt aus Metall gefertigten Reinigungselemente 40 wirken gegenüber der Verschlußnadel 20 als Abstreifer, insbesondere als Abstreiferpaket, d.h. gegebenenfalls an der Verschlußnadel 20 anhaftende Materialreste werden von den Scheibenkanten 43 erfaßt und von der Reinigungsvorrichtung 10 aufgenommen, ohne daß eine Unterbrechung des Spritzgießprozesses notwendig wird. Das von dem Außenumfang 24 der Verschlußnadel 20 entfernte Material wird in den von den Distanzstücken 14 geschaffenen Hohlräumen 46 zwischen den Reinigungsscheiben 40 gesammelt. Die Reinigungsvorrichtung 10 kann daher auch über einen längeren Zeitraum problemlos eingesetzt werden. Reingungs- oder Wartungsarbeiten sind auf ein Minimum reduziert.

Man erkennt, daß die Reinigungsvorrichtung 10 insgesamt koaxial zur Verschlußnadel 20 ausgebildet und in unmittelbarer Nähe zur Führungsbuchse 30 angeordnet ist. Das aus dieser austretende Material wird daher sofort von der Reinigungsvorrichtung 10 erfaßt und von der Nadel 20 entfernt. Diese kann ungehindert in der Führungsbuchse 30 hin und her gleiten, ohne daß die Dichtwirkung der Führungsbuchse 30 beeinträchtigt wird. Die gesamte Spritzgießvorrichtung 1 arbeitet stets sauber und zuverlässig.

Die Erfindung ist nicht auf eine der vorbeschriebenen Ausführungsformen beschränkt, sondern in vielfältiger Weise abwandelbar. So können die Reinigungselemente 40 nicht nur als Ringscheiben, sondern auch als längliche Streifenelemente ausgebildet sein, die beispielsweise winkelversetzt zwischen den Distanzstücken liegen. Man kann die als Flachkörper ausgebildeten Reinigungselemente 40 aber auch einzeln oder als Paket unmittelbar an der Unterseite der Aufspannplatte 2 oder der Oberseite der Verteilerplatte 3 anordnen. Wichtig ist stets, daß die der Verschlußnadel 20 zugewandten Kanten 43 der Reinigungselemente 40 entweder formschlüssig an die Kontur des Außenumfangs 24 angepaßt sind und/oder reibschlüssig an diesem anliegen.

Man kann die Abstreiferkanten 43 der scheibenförmig oder streifenförmig ausgebildeten Reinigungselemente 40 ferner abkröpfen, um den Reinigungseffekt weiter zu verbessern, wobei die Kröpfkanten abwechselnd in unterschiedliche Richtungen zeigen können.

Weitere Vorteile ergeben sich, wenn man die Reinigungsvorrichtung 10 mit samt dem Gehäuse 11 oder einzelne Reinigungselemente 40 in der Führungsbuchse 30 integriert.

Die Reinigungselemente 40 sind bevorzugt aus Metall gefertigt. Man kann aber auch ein Kunststoffmaterial verwenden, das gegenüber der zu verarbeitenden Spritzgußmasse physikalisch, chemisch und thermisch resistent ist.

In einer weiteren Ausführungsform können auf den Kanten 43 der Reinigungselemente 40 separate Abstreiferelemente oder Bürsten aufgesetzt werden, die in direktem Kontakt mit dem Außenumfang 24 der Verschlußnadel 20 stehen. Hierbei kann man das Reinigungselement 40 selbst aus einem Kunststoff fertigen, während die aufgesetzten Kantenelemente aus Metall bestehen, oder umgekehrt

Eine noch andere Alternative sieht vor, daß durch jedes Reinigungselement 40 zwei oder mehr Verschlußnadeln 20 durchgeführt werden, was insbesondere dann von Vorteil ist, wenn die Nestabstände und damit die Verschlußnadeln 20 im Spritzgießwerkzeug sehr eng nebeneinander liegen. Die Reinigungselemente 40 sind in diesem Fall mit der entsprechenden Anzahl an Öffnungen 42 versehen.

Die Reinigungsvorrichtung 10 muß nicht zwingend in der Aufspannplatte 2 eingeschraubt sein. Man kann das Gehäuse 11 auch einstecken und durch ein separates Sicherungselement gegen Herausfallen sichern, beispielsweise durch einen Sicherungsring, Schrauben oder Klemmelemente. Denkbar ist auch, die Reinigungsvorrichtung 10 außen auf der Spannplatte 2 aufzusetzen und mit Halteflanschen oder -bügeln zu fixieren. Oder man befestigt die Reinigungsvorrichutng 10 an der Verteilerplatte 3.

Um den Reinigungseffekt noch weiter zu verstärken, können die Reinigungsvorrichtung 10 und/oder die Reinigungselemente 40 gegenüber der Verschlußnadel 20 rotierend ausgebildet sein. Ergänzend oder Alternativ kann die Reinigungsvorrichtung 10 gegenüber der Verschlußnadel 20 auch eine eigene Hubbewegung ausführen.

Man erkennt, daß innerhalb der Spritzgießvorrichtung 1 eine Reinigungsvorrichtung 10 vorgesehen, um die Verschlußnadeln 20 der Spritzgießvorrichtung 1 während des Betriebes sauber halten zu können. Die Spritzgießvorrichtung 1 hat wenigstens eine Nadelverschlußdüse, durch die ein fließfähiges Material einem trennbaren Formeinsatz zuführbar ist, wobei die Verschlußnadel 20 mittels eines Antriebs in eine Öffnungs- und in eine Schließstellung bringbar ist. Jeder Verschlußnadel 20 ist wenigstens ein an den Außenumfang 24 der Verschlußnadel 20 formangepaßtes Reinigungselement 40 zugeordnet, mit dem am Außenumfang 24 der Verschlußnadel 20 anhaftendes Material entfernbar ist. Die bevorzugt als flache Scheiben ausgebildeten Reinigungselemente 40 sind in einem Gehäuse 11 zu einem Abstreiferpaket zusammengefaßt, wobei zwischen zwei benachbarten Reinigungselementen 40 Distanzstücke 14 angeordnet sind. Das Gehäuse 11 ist an oder in der Spritzgießvorrichtung 1 festlegbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- L: Längsachse

- 1: Spritzgießvorrichtung
- 2: Aufspannplatte
- 3: Verteilerplatte
- 4: Strömungskanal
- 5: Unterseite
- 6: Durchgangsbohrung
- 7: Ausnehmung
- 8: Innengewinde

- 10: Reinigungsvorrichtung
- 11: Gehäuse
- 12: Wandung
- 13: Flanschrand
- 14: Distanzstück
- 15: Sicherungsring
- 16: Aussparung
- 18: Außengewinde

- 20: Verschlußnadel

- 22: Adapter
- 23: Endabschnitt
- 24: Außenumfang

- 30: Führungsbuchse
- 31: Durchgangsbohrung
- 32: Endbereich
- 33: Endbereich
- 34: Freiraum
- 35: Flansch
- 36: Aussparung
- 37: Schraubbuchse

- 40: Reinigungselement
- 42: Öffnung
- 43: Kante
- 44: Radialschlitz
- 45: Kreissegment
- 46: Hohlraum

## Patentansprüche

1. Reinigungsvorrichtung (10) zur Verwendung in einer Spritzgießvorrichtung (1) mit wenigstens einer Nadelverschlußdüse, durch die ein fließfähiges Material einem trennbaren Formeinsatz zuführbar ist und deren Verschlußnadel (20) mittels eines Antriebs in eine Öffnungs- und in eine Schließstellung bringbar ist, **dadurch gekennzeichnet, daß** jeder Verschlußnadel (20) wenigstens ein Reinigungselement (40) zugeordnet ist, mit dem am Außenumfang (24) der Verschlußnadel (20) anhaftendes Material entfernbar ist.

2. Reinigungsvorrichtung nach Anspruch 1, **dadurch gekennzeichnet, daß** das Reinigungselement (40) an den Außenumfang (24) der Verschlußnadel (20) formangepaßt ist.

3. Reinigungsvorrichtung nach Anspruch 1 oder 2, **dadurch gekennzeichnet, daß** das Reinigungselement (40) mit dem Außenumfang (24) der Verschlußnadel (20) zumindest abschnittsweise reibschlüssig in Kontakt steht.

4. Reinigungsvorrichtung nach einem der Ansprüche 1 bis 3, **dadurch gekennzeichnet, daß** das Reinigungselement (40) eine Kante (43) oder einen Randbereich aufweist, die bzw. der benachbart zum Außenumfang (24) der Verschlußnadel (20) angeordnet ist.

5. Reinigungsvorrichtung nach einem der Ansprüche 1 bis 4, **dadurch gekennzeichnet, daß** das Reinigungselement (40) ein Flachkörper ist.

6. Reinigungsvorrichtung nach einem der Ansprüche 1 bis 5, **dadurch gekennzeichnet, daß** das Reinigungselement (40) kreisförmig, scheibenförmig, ringförmig oder streifenförmig ausgebildet ist.

7. Reinigungsvorrichtung nach einem der Ansprüche 1 bis 6, **dadurch gekennzeichnet, daß** das Reinigungselement (40) in einem Winkel (α) zur Längsachse (L) der Verschlußnadel (20) ausgerichtet oder angestellt ist.

8. Reinigungsvorrichtung nach Anspruch 7, **dadurch gekennzeichnet, daß** der Winkel (α) 45° bis 135°, vorzugsweise 90° beträgt.

9. Reinigungsvorrichtung nach Anspruch 7 oder 8, **dadurch gekennzeichnet, daß** das Reinigungselement (40) hut-, trichter- oder kegelförmig ausgebildet ist, wobei die Verschlußnadel (20) das Reinigungselement (40) zentrisch durchsetzt.

10. Reinigungsvorrichtung nach einem der Ansprüche 1 bis 9, **dadurchgekennzeichnet**, daß das Reinigungselement (40) wenigstens eine Öffnung (42) zur Aufnahme wenigstens einer Verschlußnadel (20) aufweist.

11. Reinigungsvorrichtung nach Anspruch 10, **dadurch gekennzeichnet, daß** das Reinigungselement (40) ausgehend von der Öffnung (42) mit radialen Schlitzen (44) oder Nuten versehen ist.

12. Reinigungsvorrichtung nach einem der Ansprüche 1 bis 11, **dadurch gekennzeichnet, daß** die Reinigungselemente (40) quer zur Längsachse (L) radial beweglich sind.

13. Reinigungsvorrichtung nach einem der Ansprüche 1 bis 12, **dadurch gekennzeichnet, daß** das Reinigungselement (40) symmetrisch zur Längsachse (L) der Verschlußnadel (20) ausgebildet ist.

14. Reinigungsvorrichtung nach einem der Ansprüche 1 bis 13, **dadurch gekennzeichnet, daß** in Längsrichtung (L) der Verschlußnadel (20) wenigstens zwei Reinigungselemente (40) hintereinander angeordnet sind.

15. Reinigungsvorrichtung nach Anspruch 14, **dadurch gekennzeichnet, daß** zwischen zwei benachbarten Reinigungselementen (40) Distanzstücke (14) angeordnet sind.

16. Reinigungsvorrichtung nach einem der Ansprüche 1 bis 15, **dadurch gekennzeichnet, daß** die Reinigungselemente (40) in einem Gehäuse (11), einer Halterung o.dgl. angeordnet sind.

17. Reinigungsvorrichtung nach Anspruch 16, **dadurch gekennzeichnet, daß** das Gehäuse (11) an oder in der Spritzgießvorrichtung (1) festlegbar ist.

18. Spritzgießvorrichtung (1) mit einer Reinigungsvorrichtung (10) nach einem der Ansprüche 1 bis 17.

19. Spritzgießvorrichtung nach Anspruch 18, **dadurch gekennzeichnet, daß** die Reinigungsvorrichtung (10) an oder in einer Aufspannplatte (2) der Spritzgießvorrichtung (1) angeordnet sind.

20. Spritzgießvorrichtung nach Anspruch 18 oder 19, **dadurch gekennzeichnet, daß** die Reinigungsvorrichtung (10) an oder in einer Verteilerplatte (3) der Spritzgießvorrichtung (1) angeordnet sind.

21. Spritzgießvorrichtung nach einem der Ansprüche 18 bis 20, **dadurch gekennzeichnet, daß** die Reinigungsvorrichtung (10) zwischen der Aufspannplatte (2) und der Verteilerplatte (3) angeordnet ist.

22. Spritzgießvorrichtung nach einem der Ansprüche 18 bis 21, **dadurch gekennzeichnet, daß** die Reinigungsvorrichtung (10) benachbart zu einer Führungs- oder Dichtbuchse (30) für die Verschlußnadel (20) angeordnet ist.

23. Spritzgießvorrichtung nach einem der Ansprüche 18 bis 22, **dadurch gekennzeichnet, daß** die Reinigungsvorrichtung (10) in der Führungs- oder Dichtbuchse (30) integriert ist.

24. Verwendung einer Reinigungsvorrichtung (10), insbesondere nach einem der Ansprüche 1 bis 17, in einer Spritzgießvorrichtung (1).
